# EUROPEAN PATENT APPLICATION

(11) **EP 0 653 341 A1**
(43) Date of publication of application: **17.05.1995**
(21) Application number: 94308463.2
(22) Date of filing: 16.11.1994
(51) Int. Cl.: B62B 3/00, B62D 61/10, B62D 51/00

(54) **Motordriven trolley**

(30) Priority: 16.11.1993 GB 9323578
(71) Applicant: Moore, Jonathan, Wimblington, Cambs. PE15 0QT (GB); Brown, Keith Kavannah, Bishop Stortford, Herts (GB)
(72) Inventor: Moore, Jonathan, Wimblington, Cambs. PE15 0QT (GB); Brown, Keith Kavannah, Bishop Stortford, Herts (GB)
(74) Representative: Style, Kelda Camilla Karen

(57) **Abstract**

A trolley (1) has a base (2) supported on a plurality of wheels (6). A further wheel (8) is provided. Power is supplied to this further wheel (8) which is supported by a pivotally mounted support member (11). The contact pressure between the further wheel (8) and the ground may be varied between a first contact pressure when power is supplied to the further wheel (8) and a second contact pressure less than the first contact pressure when no power is supplied to the further wheel (8). The further wheel (8) also has a trolley turning position. In this trolley turning position, the trolley is turned about further wheel (8).

## Description

The present invention relates to a trolley and particularly to a powered trolley which is suitable for use in moving heavy loads in confined areas, for example, for moving books in a library or laundry and equipment in a hospital.

In many environments, particularly at work, it is often necessary for objects which are heavy to be moved. In warehouses or the like this is done by means of machinery such as fork lift trucks. However, such machinery is not suitable where there is a lack of space and/or where the objects to be moved are individually light in weight and are loaded individually but are moved in groups, the cumulative weight of which is large. Moreover, such machinery is often expensive to acquire and maintain and the cost is prohibitive where the movement of objects is not a continuous operation. Hence, in many environments such as supermarkets, libraries and hospitals traditionally trolleys which must be pushed or pulled by the employees have been used to move objects. Trolleys have the advantage of being very manoeuvrable particularly when they are supported on swivel mounted wheels. On the other hand, although the loading and off-loading of such trolleys is not physically demanding where the individual objects are lightweight, the pushing or pulling of the loaded trolley can be very physically demanding and can all too easily cause injury. Moreover, it is well known that trolleys which use swivel mounted wheels can be difficult to control and keep in a straight line when moving. This is especially the case when the trolley is carrying a heavy load.

The present invention seeks to overcome disadvantages such as those described above of traditional trolleys. In addition, the present invention seeks to provide a trolley suitable for moving heavy loads which is easily manoeuvrable within a confined space and so is particularly suited for use in the office, in libraries, hospitals, supermarkets or the like.

The present invention provides a trolley comprising a base supported on a plurality of wheels and driving means connected to at least one further wheel, the further wheel being supported by a wheel support frame which enables movement of the further wheel between a driven position and a trolley turning position.

In a further aspect the present invention provides a trolley having a base supported on a plurality of wheels and a further wheel, there being means for supplying power to the further wheel and the further wheel being supported by a pivotally mounted support member whereby the contact pressure between the further wheel and the ground may be varied between a first contact pressure when power is being supplied to the further wheel and a second contact pressure, less than said first contact pressure, when no power is being supplied to the further wheel.

Thus, with the present invention a trolley is provided which is powered thereby reducing the physical effort required to move the trolley but which is easily manoeuvrable even in a confined space. In addition, since the trolley is powered the movement of the trolley in a straight line is improved over that of manually powered trolleys.

Preferably, the further wheel is located substantially centrally of the base of the trolley in an opening provided in the base of the trolley. In this way complete manoeuvrability of the trolley is allowed.

Moreover, the wheel support frame may comprise side members supporting a rod which is fixedly connected to the further wheel, the rod being capable of pivoting about its mounting with the side members. In a preferred embodiment a side member is mounted either side of the further wheel with the rod extending between the side members above the further wheel and, when the trolley is at rest, a line passing through the pivot axis of the rod and the rotational axis of the further wheel may be at an angle'of between 5 to 10 degrees to the vertical. The further wheel may be driven by an electric motor which may be powered by a battery mounted on the trolley.

It is to be understood that reference herein to a trolley is reference to any movable load-bearing vehicle such as a cart or barrow.

An embodiment of the present invention will now be described by way of example with reference to the accompanying drawings, in which:
Figure 1 is a perspective view of a trolley in accordance with the present invention;

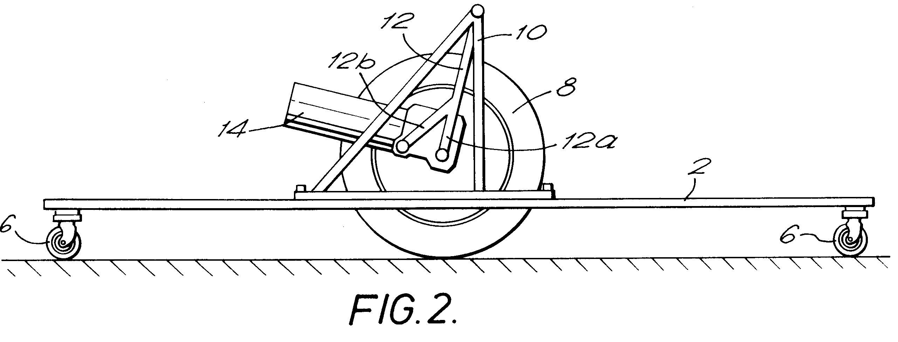

Figure 2 is a side view of the base of the trolley of Figure 1; and

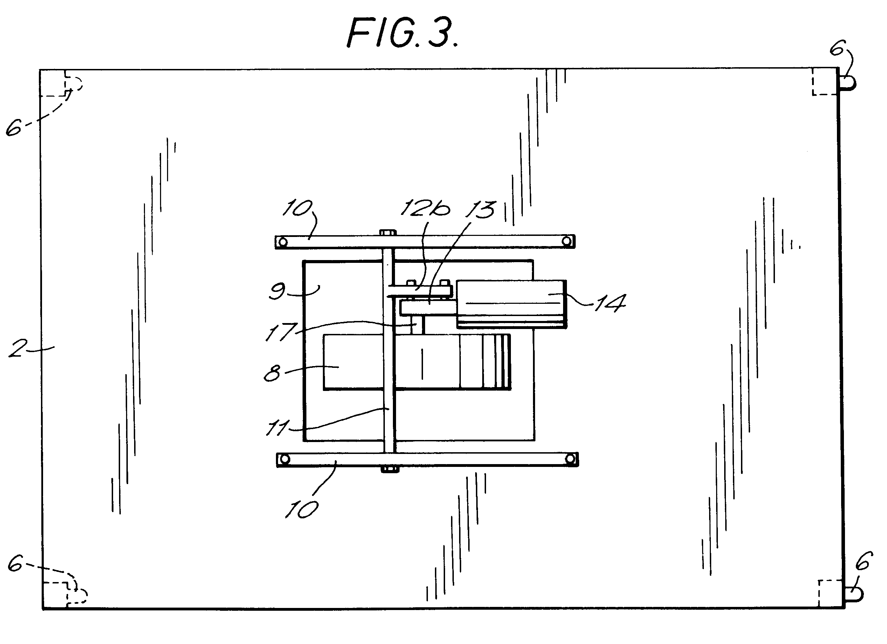

Figure 3 is a plan view from above of the base of the trolley of Figure 1.

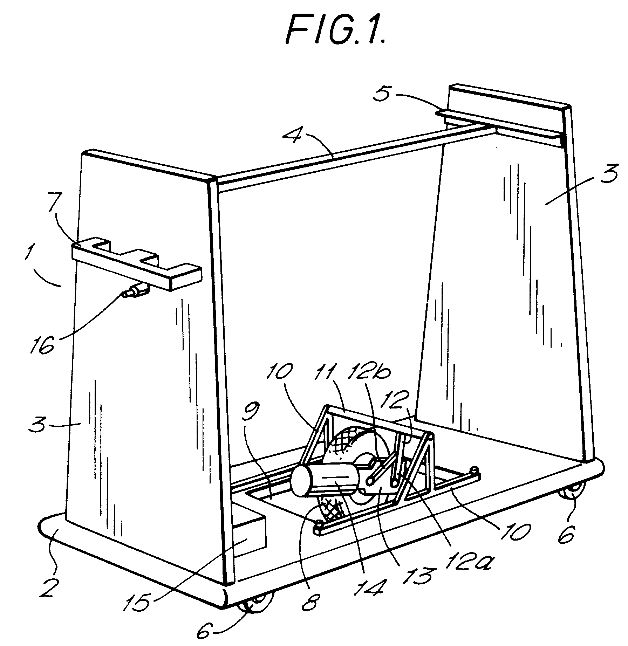

The trolley 1 shown in Figure 1 has a base 2 and a pair of opposing upstanding end walls 3. The upper portions of the end walls 3 are supported and held apart a predetermined distance by a crossbrace or cross member 4.

The cross member 4 is attached at opposing ends to the respective end walls 3 in any conventional manner by means of brackets 5. Thus, the base 2, end walls 3 and cross member 4 define a space, which is open at the sides, within which a load to be carried by the trolley 1 may be placed. Shelves, not shown, may be provided extending between the two end walls 3 and upstanding side walls, not shown, may also be provided with or without doors to ensure any object loaded on the trolley does not inadvertently fall off.

On a lower surface of the base 2 wheels 6 are provided at each corner. Thus, four wheels 6 are provided with the trolley 1 shown in the Figures. The wheels 6 support the trolley 1 and enable it to be moved. The wheels 6 may be attached to the base 2 by means of a swivel joint so that the axis of rotation of each of the wheels 6 can be easily swivelled or rotated within a plane which lies parallel with the base 2. For example, the wheels 6 may be in the form of casters. In this way the trolley 1 is easily manoeuvred, even in a confined space. A handle 7 is also provided on the outer surface of one or both of the end walls 3 to be held by a person controlling the movement of the trolley 1.

A further wheel 8 which is powered is mounted in and extends through an opening 9 provided approximately centrally in the base 2. The powered wheel 8 is supported in position in the opening 9 by a wheel support frame. The wheel support frame has side members in the form of two opposing wheel support brackets 10 which are mounted either side of the opening 9 and support at their upper ends a rod or spindle 11. The spindle 11, which extends between and passes through the two wheel support brackets 10, is capable of rotating freely with respect to the two wheel support brackets 10. One end of an arm 12 is fixedly attached to or is integral with the spindle 11 with the arm 12 extending generally downwardly therefrom. Preferably, the arm 12 extends downwardly at an angle of between 5 to 10 degrees from the vertical when the trolley 1 is at rest.

The opposing end of the arm 12 is bifurcated providing two fingers 12a and 12b which extend downwardly at an angle to one another. Alternatively, one of the fingers 12a may be an extension of the arm 12 with the second of the two fingers 12b being fixedly attached to the arm 12 approximately midway of the length of the arm 12 and extending outwards from the arm 12 at an angle. A motor mounting 13 is attached to the fingers 12a, 12b and is supported by the fingers 12a, 12b and the arm 12. An electric motor 14, which may be any suitable conventional variable speed electric motor, for example, a 55 watt, 12 volt motor or a 180 watt motor, is in turn supported by the motor mounting 13. The motor 14 is connected to the axle 17 of the powered wheel 8 through suitable conventional gearing and drives the powered wheel 8 through the gearing. The arm 12 defines a line which passes through the pivot axis of the spindle 11 and the rotational axis of the powered wheel 8 and which lies between 5 and 10 degrees to the vertical. The gearing connecting the motor 14 to the axle 17 of the powered wheel 8 may include for example planetary reduction gearing or may include a worm gear and clutch. Where a clutch is included, this enables the powered wheel 8 to freewheel when not being driven and so prevents the wheel 8 from wearing.

The electric motor 14 is powered by means of a battery 15 which is shown mounted on the base 2 of the trolley 1. Any alternative suitable power supply may of course be used. Controls 16 for controlling the operation of the motor 14 and thereby the speed of the powered wheel 8 are mounted on the outer surface of one or both of the end walls 3 so that the controls 16 are easily accessible to the person controlling the movement of the trolley 1. Ideally, as shown in Figure 1, the controls 16 are mounted adjacent the handle 7.

Since the powered wheel 8, the motor 14, the motor mounting 13 and the arm 12 are all fixedly attached to the spindle 11, rotational movement of the spindle 11 with respect to the wheel support brackets 10 results in a corresponding pivotal motion of the arm 12, the motor mounting 13, the motor 14 and the powered wheel 8. Thus, the powered wheel 8 is suspended in a frame defined by the wheel support brackets 10, the spindle 11 and the arm 12.

When the trolley 1 is stationary and the motor 14 is turned on to drive the powered wheel 8, the powered wheel 8, which is originally in resting engagement with the ground, grips the ground and moves forward slightly within the opening 9. The forward movement of the powered wheel 8 is enabled by a corresponding pivotal movement of the spindle 11 with respect to the wheel support brackets 10. As the powered wheel 8 moves forward, the rotational axis of the powered wheel 8 moves forward and downwards with respect to the trolley 1 since the rotational axis of the wheel 8 is behind the vertical which passes through the axis of the spindle 11 when at rest. The forward movement of the powered wheel 8 increases the contact pressure and hence the traction between the powered wheel 8 and the ground until the inertia of the trolley 1 is overcome and the trolley 1 begins to move.

When the trolley 1 is being moved and changes are made in its direction of motion, the wheel 8 may continue to be powered. Since the powered wheel 8 is centrally located the powered wheel 8 does not interfere with any changes in the direction of motion of the trolley and instead assists in ensuring that the body of the trolley 1 is turned so as to face in the chosen direction of motion, unlike traditional trolleys which can have a tendency to face in a direction different to that of the desired direction of motion.

When the trolley 1 is to be turned about itself, power to the powered wheel 8 is stopped so that the powered wheel 8 is in its rest position or trolley turning position. In this position the powered wheel 8 is in slipping contact with the ground and acts as the pivot point about which the trolley 1 may be turned.

Hence, the powered wheel 8 can be used to provide the necessary traction force to start the trolley 1 moving and to maintain the movement of the trolley in a selected direction when it is in a driving position. Also, when the powered wheel 8 is in a rest position or a trolley turning position, in which position there is little contact pressure between the powered wheel 8 and the ground and so the powered wheel 8 is in slipping contact with the ground, the powered wheel 8 does not interfere with the turning of the trolley 1 about itself.

It will be understood that the powered wheel 8 need not be located centrally of the base 2. However, control of the movement of the trolley 1 and in particular turning of the trolley 1 on its casters 6 is made easier when the powered wheel 8 is centrally located. Also, not all of the casters 6 need be in contact with the ground simultaneously, when the trolley 1 is in use.

Moreover, it will be appreciated that the angle of the arm 12 or the line which passes through the pivot axis and the rotational axis to the vertical when the trolley is at rest need not be limited to between 5 to 10 degrees. For example, if a soft i.e. pneumatic tyre is provided on the powered wheel 8 then the angle may be less than 5 degrees. The positioning of the arm 12 and hence the angle of the arm 12 to the vertical when the trolley 1 is at rest is dependent on the type of wheel and tyre being used and on the type and position of the wheel support frame. In general, the angle must be such as to enable the powered wheel 8 to be moved between a driving position when there is an increased contact pressure between the powered wheel 8 and the ground and traction is established and a rest position when there is a low contact pressure and the powered wheel 8 is in slipping contact with the ground.

It will be understood that where reference is made to the movement of the powered wheel 8 between a driving position and a rest or trolley turning position, the powered wheel 8 remains in contact with the ground at all times. The different positions of the powered wheel 8 relate to different positions of the rotational axis of the wheel 8 with respect to the trolley 1 which result in corresponding different contact pressures between the powered wheel 8 and the ground with the driving position of the powered wheel 8 providing a greater contact pressure than the rest position when the powered wheel 8 is in slipping contact with the ground.

## Claims

1. A trolley comprising a base supported on a plurality of wheels and driving means connected to at least one further wheel, the further wheel being supported by a wheel support frame which enables movement of the further wheel between a driven position and a trolley turning position.

2. A trolley having a base supported on a plurality of wheels and a further wheel, there being means for supplying power to the further wheel and the further wheel being supported by a pivotally mounted support member whereby the contact pressure between the further wheel and the ground may be varied between a first contact pressure when power is being supplied to the further wheel and a second contact pressure less than said first contact pressure when no power is being supplied to the further wheel.

3. The trolley as claimed in either of claims 1 or 2, wherein the further wheel is located substantially centrally of the base of the trolley.

4. The trolley as claimed in claim 3, wherein the further wheel is mounted in an opening provided in the base of the trolley.

5. The trolley as claimed in claim 1, wherein the wheel support frame comprises side members supporting a support member which is fixedly connected to the further wheel, the support member being capable of pivoting about its mounting with the side members.

6. The trolley as claimed in claim 5, wherein a side member is mounted either side of the further wheel with the support member extending between the side members above the further wheel.

7. The trolley as claimed in claim 4 and claim 6, wherein the side members are mounted either side of the opening provided in the base.

8. The trolley as claimed in either claim 2 or claim 5, wherein, when the trolley is at rest, a line passing through the pivot axis of the support member and the rotational axis of the further wheel is at an angle of between 5 to 10 degrees to the vertical.

9. The trolley as claimed in any one of the preceding claims, wherein the further wheel is driven by an electric motor.

10. The trolley as claimed in claim 8, wherein the electric motor is powered by a battery mounted on the trolley.

11. The trolley as claimed in any one of the preceding claims, wherein the plurality of wheels are in the form of a plurality of casters.

12. The trolley as claimed in claim 11, wherein there are four casters.

13. The trolley as claimed in any one of the preceding claims, wherein all of the wheels of the plurality of wheels make contact with the ground simultaneously.
